# EUROPEAN PATENT APPLICATION

(11) **EP 4 613 107 A1**
(43) Date of publication of application: **10.09.2025**
(21) Application number: 23885709.8
(22) Date of filing: 30.10.2023
(51) Int. Cl.: A23L 7/10

(54) **MANUFACTURING METHOD OF COOKED RICE**

(30) Priority: 31.10.2022 JP 2022174164
(71) Applicant: Amano Enzyme Inc., Nagoya-shi Aichi 460-8630 (JP)
(72) Inventor: YAMASHIRO Kan, Kakamigahara-shi, Gifu 509-0109 (JP); YANG Minghong, Kakamigahara-shi, Gifu 509-0109 (JP)
(74) Representative: Witthoff Jaekel Steinecke Patentanwälte PartG mbB
(86) International application number: PCT/JP2023/039063
(87) International publication number: WO 2024/095954

(57) **Abstract**

This invention provides cooked rice or a processed cooked rice product in which retrogradation is suppressed. This invention also provides a method for producing cooked rice or a processed cooked rice product in which retrogradation is suppressed, including: a step of allowing 4-α-glucanotransferase and/or β-amylase to act on uncooked rice as a starting material; and a step of rice cooking performed by increasing the amount of water.

## Description

### Technical Field

The present invention relates to a method for producing cooked rice. More particularly, the present invention relates to a method for improving effects of suppressing retrogradation of cooked rice by incorporating 4-α-glucanotransferase and/or β-amylase into rice and increasing the amount of water at the time of rice cooking.

### Background Art

In recent years, awareness for food loss reduction is increasing. Also, the style of meals referred to as "home meal replacements," which are ready-to-eat food products, such as *sozai* (translator's notes: delicatessen food), *bento* (translator's notes: a meal including rice and packaged in a box with a lid), and *sushi* purchased from supermarkets or convenience stores and brought back home to eat, is increasing. Under the influence of an increase in the price of wheat products, in addition, an interest in cooked rice or a processed cooked rice product is increasing. Retrogradation of cooked rice or a processed cooked rice product advances with the elapse of time, and cooked rice or a processed cooked rice product is not preferred because of deterioration in hardness, stickiness, and deliciousness. Accordingly, techniques of suppressing retrogradation of cooked rice or a processed cooked rice product have been developed.

In recent years, studies have been made on suppression of retrogradation of cooked rice.

For example, Patent literature 1 discloses a method for producing cooked rice using 4-α-glucanotransferase, which is aimed at obtaining cooked rice that remains preferred after a lapse of a long period of time. Patent literature 2 discloses a method for suppressing retrogradation of cooked rice by adding maltotriosyl transferase to water that soaks rice before rice cooking and then cooking rice, so as to suppress retrogradation of rice. Patent Literature 3 discloses a method for producing cooked rice involving the use of two or more of a branching enzyme, an exo-type amylase, and 4-α-glucanotransferase, so as to obtain a cooked rice product or processed rice product that can suppress an increase in blood sugar levels.

### Citation List

### Patent Literature

Patent Literature 1: WO 2022/004402
Patent Literature 2: WO 2011/001722
Patent Literature 3: WO 2021/210626

### Summary of Invention

### Technical Problem

Techniques for improving effects of suppressing retrogradation of cooked rice or a processed cooked rice product are not yet fully developed. Accordingly, the present invention is intended to provide cooked rice or a processed cooked rice product in which retrogradation is suppressed.

### Solution to Problem

Retrogradation of cooked rice or a processed cooked rice product advances with the elapse of time, and cooked rice or a processed cooked rice product is not preferred because of deterioration in hardness, stickiness, and deliciousness.

The present inventors have conducted concentrated studies. As a result, they discovered that effects of suppressing retrogradation of cooked rice would be improved by allowing 4-α-glucanotransferase and/or β-amylase to act on uncooked rice and increasing the amount of water compared with the amount of water used at the time of usual rice cooking.

Specifically, the present invention is as follows.
[1] A method for producing cooked rice or a processed cooked rice product in which retrogradation is suppressed, including: a step of allowing 4-α-glucanotransferase and/or β-amylase to act on uncooked rice as a starting material; and a step of rice cooking performed by increasing the amount of water.
[2] The method for production according to [1], in which the step of allowing 4-α-glucanotransferase and/or β-amylase to act on uncooked rice as a starting material is performed before the step of rice cooking.
[3] The method for production according to [1], in which the step of allowing 4-α-glucanotransferase and/or β-amylase to act on uncooked rice as a starting material is performed simultaneously with the step of rice cooking.
[4] The method for production according to [1], in which an amount of 4-α-glucanotransferase used per g of uncooked rice is an amount corresponding to an enzyme activity of 0.01 U or more.
[5] The method for production according to [1], in which a ratio of weight of water to weight of uncooked rice is 1.45 to 1.8.
[6] An agent for suppressing retrogradation of cooked rice or a processed cooked rice product, including 4-α-glucanotransferase and/or β-amylase.
[7] Cooked rice or a processed cooked rice product, which is obtained by the method for production according to any one of [1] to [5].
[8] The cooked rice or processed cooked rice product according to [7], which includes starch having a branched chain containing 3 sugar units linked by α-1,3 bonds.

The description incorporates the contents disclosed by JP Patent Application No. 2022-174164, based on which the priority of the present application claims.

### Advantageous Effects of Invention

The present invention provides cooked rice or a processed cooked rice product in which retrogradation is suppressed. In the cooked rice or processed cooked rice product produced by the method of the present invention, specifically, retrogradation is suppressed even when the cooked rice or processed cooked rice product is stored for a long period of time.

### Brief Description of Drawings

[Figure 1] Figure 1 shows hardness of the cooked rice produced by the method of the present invention.
[Figure 2] Figure 2 shows stickiness of the cooked rice produced by the method of the present invention.

### Description of Embodiments

Hereafter, the present invention is described in detail.

### <Outline of the method for producing cooked rice>

The method for producing cooked rice of the present invention includes a step of allowing 4-α-glucanotransferase and/or β-amylase to act on rice in which the amount of water is increased compared with the amount of water at the time of usual rice cooking. Also, the method for producing cooked rice of the present invention can include a step of allowing 4-α-glucanotransferase and/or β-amylase to act on rice and a step of rice cooking performed by increasing the amount of water. The "allowing 4-α-glucanotransferase and/or β-amylase to act on" rice means that 4-α-glucanotransferase and/or β-amylase is added to water used at the time of production of cooked rice, i.e., at the time of rice cooking, and is used, and the "being used" means to cause an enzyme reaction. Thus, effects of suppressing retrogradation of the resulting cooked rice or processed cooked rice product can be improved. In a preferable aspect, hardness of the cooked rice stored for a long period of time can be lowered and stickiness thereof can be improved, compared with those of the cooked rice obtained with the use of water in an amount used at the time of usual rice cooking.

### <Starting material>

The type of uncooked rice used in the present invention is not particularly limited. The term "uncooked rice" may refer to rice that is not subjected to soaking or heating after harvesting. For example, factors used to specify the uncooked rice, such as the variety, the production area, the rice polishing rate, and the storage period, can be adequately selected. Uncooked rice may be japonica rice or indica rice, with the japonica rice being preferable. Non-glutinous rice or glutinous rice may be used, with the non-glutinous rice being preferable. The uncooked rice polishing rate is not particularly limited. For example, polished rice, pre-washed rice, unpolished rice, sprouted rice, or pre-germinated brown rice may be used, with the polished rice being preferable. Uncooked rice may be, for example, freshly harvested rice, rice harvested in the previous year, or rice harvested in the year before the previous year. One type of uncooked rice may be used, or two or more types of uncooked rice may be used in combination. The water content of the uncooked rice is not particularly limited. For example, it is 12% to 17%, and it is preferably 13% to 16%.

### <Enzyme>

### (1) Enzyme type

4-α-glucanotransferase is an enzyme that catalyzes a chemical reaction that transfers a part of 1,4-α-glucan to another part of a hydrocarbon, such as glucose or 1,4-α-D-glucan (EC2.4.1.25).

The type, the origin, and other conditions of the 4-α-glucanotransferase used in the present invention are not particularly limited, provided that such enzyme acts on a polysaccharide and an oligosaccharide having α-1,4 glucoside bonds and transfers the maltotriose unit to the saccharide.

Specific examples of 4-α-glucanotransferase include: 4-α-glucanotransferase derived from plants, such as potato (*Solanum tuberosum L.*) tubers; 4-α-glucanotransferase derived from actinomycetes (limited to *Streptomyces avermitilis*, *Streptomyces cinnamoneus*, *Streptomyces griseus*, *Streptomyces thermoviolaceus*, and *Streptomyces violaceoruber*); and 4-α-glucanotransferase derived from bacteria of *Agrobacterium radiobacter*, the genus *Arthrobacter*, the genus *Bacillus*, the genus *Erwinia*, *Geobacillus pallidus*, *Geobacillus stearothermophilus, Gluconobacter oxydans, Leuconostoc mesenteroides, Paenibacillus alginolyticus*, the genus *Pimelobacter*, the genus *Protaminobacter*, the genus *Pseudomonas*, the genus *Serratia*, *Sporosarcina globispora*, and the genus *Thermus.*

### (2) Method for obtaining enzyme

In the present invention, a commercially available product of 4-α-glucanotransferase can be used. An example of a preferable commercially available product is 4-α-glucanotransferase derived from *Aeribacillus pallidus* manufactured by Amano Enzyme Inc. Alternatively, 4-α-glucanotransferase can be isolated from the bacteria described above and the like, purified, and used.

### (3) Amount of enzyme used

The amount of 4-α-glucanotransferase used; i.e., the amount thereof to be added at the time of production of cooked rice, is not particularly limited. The amount of 4-α-glucanotransferase used per g of uncooked rice is an amount corresponding to, for example, an enzyme activity of 0.001 U or more. In order to suppress retrogradation more effectively, the amount of 4-α-glucanotransferase used is preferably 0.01 U or more, 0.02 U or more, or 0.05 U or more, more preferably 0.1 U or more, and further preferably 0.15 U or more, 0.3 U or more, 0.6 U or more, 1 U or more, or 2U or more. The upper limit of the amount of 4-α-glucanotransferase used per g of uncooked rice is not particularly limited. For example, the upper limit is 300 U or less, 100 U or less, 50 U or less, 20 U or less, 10 U or less, 5 U or less, or 4 U or less.

### (4) Definition of enzyme activity

Concerning the 4-α-glucanotransferase activity, the amount of the enzyme that generates 1 µmol of glucose per minute upon treatment with the use of a maltotetraose substrate at a pH of 6.5 and 40°C is defined as 1 unit (1 U). The enzyme activity can be assayed in accordance with a conventional technique.

### <Enzyme used in combination>

In the method of the present invention, other enzymes may be used in combination, provided that 4-α-glucanotransferase is used. An example of other enzyme is β-amylase.

β-amylase used in the present invention is not particularly limited, provided that such enzyme acts on starch, dextrin, or glycogen to generate maltose. A single type of β-amylase may be used by itself, or a plurality of types thereof may be used in combination. Examples of transglucosidase include transglucosidase obtained from a culture product of filamentous bacteria (limited to *Aspergillus niger* and *Aspergillus usamii*) and transglucosidase obtained from a culture product of bacteria (limited to *Sulfolobus solfataras*). Examples of plant origins of β-amylase include malt, cereal seed, bean seed, and potato root tuber, tuber, and rhizophore. Examples of microbial origins of β-amylase include β-amylase obtained from a culture product of filamentous bacteria (limited to *Aspergillus oryzae*), actinomyces (limited to *Streptomyces*), and bacteria (limited to *Bacillus amyloliquefaciens*, *Bacillus flexus*, *Bacillus polymyxa*, and *Bacillus subtilis*).

The amount of β-amylase used is not particularly limited. The amount of β-amylase used per g of uncooked rice is, for example, 0.001 U or more or 0.005 U or more. In order to further enhance the effects, the amount of β-amylase used per g of uncooked rice is preferably 0.01 U or more, 0.05 U or more, 0.1 U or more, or 0.5U or more. The upper limit of the amount of β-amylase used per g of uncooked rice is not particularly limited. For example, the upper limit is 100 U, and it is preferably 50 U, 30 U, 10 U, or 5 U. β-amylase has effects of improving stickiness of cooked rice or a processed cooked rice product and effects of suppressing retrogradation thereof.

Concerning the β-amylase activity, the amount of the enzyme that would increase a reducing power equivalent to 1 mg of glucose per minute upon treatment with the use of a potato starch substrate is defined as 1 unit (1 U).

A commercially available product of the enzyme may be used. An example is β-amylase derived from *Bacillus flexus* manufactured by Amano Enzyme Inc. Alternatively, β-amylase can be isolated from the bacteria described above and the like, purified, and used.

### <Other components>

The present invention includes, in addition to the step of treatment with 4-α-glucanotransferase and/or β-amylase described above, a step of rice cooking performed by increasing the amount of water, so as to further enhance the effects. The amount of water is not particularly limited, provided that cooked rice or a processed cooked rice product as desired is produced. The amount of water addition can be adequately determined in accordance with various conditions, such as a type of a starting material of a processed cooked rice product and a type of a processed cooked rice product. "Water addition" is not limited to addition of water, and addition of a starting material containing water other than water in uncooked rice is within the scope of "water addition." When a starting material containing water is added, specifically, the amount of water addition can be reduced depending on the water content in the starting material. When a sufficient amount of water is supplied to the uncooked rice with the addition of a starting material containing water, for example, it is not necessary to additionally supply water. Examples of starting materials containing water includes soup stock, cereals, beans, mushrooms, fish and seafood, and butcher's meat added to rice at the time of rice cooking. The amount of water addition at the time of rice cooking may be determined by taking the water content in such starting materials into consideration; i.e., by reducing the water content in such starting materials.

### <Conditions for production>

The cooked rice or processed cooked rice product of the present invention can be produced by a common method of rice cooking. According to a common method of rice cooking, rice may be cooked using a commercially available rice cooker in a setting suitable for a starting material to be used and cooked rice or a processed cooked rice product of interest. Rice may be cooked by a common method with the use of a pot or an earthen pot. As described above, the amount of water addition at the time of rice cooking is set greater than that at the time of usual rice cooking. At the time of usual rice cooking, for example, 1.4 g of water is added per g of uncooked rice. In the method of the present invention, in contrast, more than 1.4 to 1.8 g, preferably 1.41 to 1.8 g, 1.43 to 1.8 g, 1.45 to 1.75 g, 1.45 to 1.8 g, 1.5 to 1.7 g, or 1.55 to 1.65 g of water is added per g of uncooked rice. In another embodiment, the amount of water addition is 1.05 times to 1.25 times, preferably 1.08 times to 1.2 times, 1.10 times to 1.18 times, or 1.12 times to 1.16 times greater than that in a case without the addition of 4-α-glucanotransferase.

In the method for production of the present invention, 4-α-glucanotransferase and/or β-amylase may be allowed to act on uncooked rice as a starting material before rice cooking or 4-α-glucanotransferase and/or β-amylase may be allowed to act on uncooked rice as a starting material at the time of rice cooking. In the method for production of the present invention, specifically, the step of allowing 4-α-glucanotransferase and/or β-amylase to act on uncooked rice as a starting material may be performed before or simultaneously with the step of rice cooking performed by increasing the amount of water.

### <Product>

In the cooked rice or processed cooked rice product obtained by the method for production of the present invention, an extent of suppressed retrogradation is improved from that in cooked rice or a processed cooked rice product obtained by a method of production that does not include a step of allowing 4-α-glucanotransferase and/or β-amylase to act on uncooked rice and increasing the amount of water at the time of rice cooking.

Starch is modified to have a branched chain structure with the aid of 4-α-glucanotransferase. Accordingly, the cooked rice or processed cooked rice product obtained by the method for production of the present invention includes starch having a branched chain containing 3 sugar units linked by α-1,3 bonds.

In the cooked rice or processed cooked rice product obtained by the method of the present invention, retrogradation is suppressed, and the cooked rice or processed cooked rice product maintains a soft texture and high stickiness after a long period of storage. For example, the produced cooked rice or processed cooked rice product is stored at 15°C for 1 to 2 days, the weight to press 3 rice grains to a thickness that is 35% of the initial thickness is measured using a rheometer, and the obtained value is defined as hardness on the rice grain surface. Hardness of the cooked rice or processed cooked rice product obtained by the method of the present invention measured in such a manner is 750 g or less, and preferably 700 g or less. Hardness of the cooked rice or processed cooked rice product obtained by the method of the present invention is 95% or less, preferably 90% or less, further preferably 85% or less, and further preferably 80% or less, relative to hardness of cooked rice or a processed cooked rice product produced without the addition of an enzyme, such as 4-α-glucanotransferase, with the addition of water in an amount employed at the time of usual rice cooking.

In addition, the produced cooked rice is, for example, stored at 15°C for 1 to 2 days, 3 rice grains are pressed to a thickness that is 90% of the initial thickness, the load necessary for a plunger to return is measured using a rheometer, and the obtained value is determined as the whole stickiness. Stickiness of the cooked rice or processed cooked rice product obtained by the method of the present invention measured in such a manner is 10 g·mm or more, preferably 12.5 g·mm or more, and further preferably 15 g·mm or more. Stickiness of the cooked rice or processed cooked rice product obtained by the method of the present invention is 1.5 times or greater, and preferably 1.75 times or greater than stickiness of cooked rice or a processed cooked rice product produced without the addition of an enzyme, such as 4-α-glucanotransferase, with the addition of water in an amount employed at the time of usual rice cooking.

The term "processed cooked rice product" may refer to a food product containing cooked rice. A processed cooked rice product may be produced exclusively from uncooked rice, or it may be produced from uncooked rice and other starting materials. Specific examples of cooked rice products include white rice, festive red rice (made of steamed glutinous rice and red beans), vinegar-flavored-rice, colored-rice, flavored rice cooked with other food materials, cooked rice mixed with other food materials, cooked rice fried with other food materials, pilaf, paella, rice omelet, steamed rice made with glutinous rice and other food materials, risotto, doria, rice-based soup, porridge, tea on rice, rice ball, sushi, curry and rice, rice-bowl dish, and *bento.* A cooked rice product may be supplied in any form, such as a frozen, chilled, aseptically-packaged, retort, dry, or canned product.

### <Enzyme drug for limited application>

4-α-glucanotransferase and/or β-amylase can suppress retrogradation of cooked rice or a processed cooked rice product. Accordingly, the present invention provides an agent for suppressing retrogradation of cooked rice or a processed cooked rice product containing 4-α-glucanotransferase and/or β-amylase.

### Examples

The present invention is described in greater detail with reference to the following examples, although the present invention is not limited to these examples.

### <Enzyme application>

### Materials used

### Enzymes and starting materials used

Table 1 shows the enzymes and the starting materials used.

The enzyme used per g of uncooked rice is indicated in terms of "U."

**[Table 1]**

| Substance | Product | Distributer |
|---|---|---|
| Rice | Polished white rice of *Koshihikari* produced in Niigata, Japan on 2020 (japonica variety) | - |
| 4-α-glucanotransferase | 4-α-glucanotransferase derived from *Aeribacillus pallidus* | Amano Enzyme Inc. |
| β-amylase | β-amylase derived from *Bacillus flexus* | Amano Enzyme Inc. |

### Method of enzyme activity assay

### [Method of 4-α-glucanotransferase activity assay]

Maltotetraose (180 mg, Hayashibara) was introduced into a 20-ml measuring flask. Approximately 15 ml of 10 mmol/l MES buffer (pH 6.5) was added to and dissolved therein. Thereafter, 10 mmol/l MES buffer (pH 6.5) was added thereto to fix the volume to 20 ml, and the resultant was used as a substrate solution.

**The substrate** solution (2 ml) was taken and introduced into a test tube, the test tube was allowed to stand at 40 ± 0.5°C for 10 to 15 minutes, 0.5 ml of the sample solution was added thereto, the mixture was sufficiently shaken to mix, and the resultant was then allowed to stand at 40 ± 0.5°C exactly for 60 minutes. Thereafter, the tube was introduced into a boiling water bath, heated exactly for 5 minutes, and then cooled with running water. The glucose generated was quantified with LabAssay Glucose (FUJIFILM Wako Pure Chemical Corporation). LabAssay Glucose is a kit that consists of a coloring agent containing mutarotase, glucose oxidase, peroxidase, 4-aminoantipyrine, and ascorbate oxidase and a buffer containing phosphate buffer (pH 7.1) and phenol and that enables determination of glucose concentration by assaying the red dye generated as a result of oxidative condensation of phenol and 4-aminoantipyrine.

The amount of the enzyme that generates 1 µmol of glucose per minute under the conditions described above is defined as 1 U.

### [Method of β-amylase activity assay]

Assay was performed based on the method described in Japan's Specifications and Standards for Food Additives (9th edition). Specifically, potato starch was used as a substrate, it was dried in advance at 105°C for 2 hours, a portion of 1.0 g was separated from the dried product, 20 ml of water was added, and 5 ml of a sodium hydroxide test solution (2 mol/l) was gradually added with stirring to prepare a sticky paste. Subsequently, the resultant was heated in a water bath for 3 minutes with stirring, and 25 ml of water was added. After cooling, a hydrochloric acid test solution (2 mol/l) and a hydrochloric acid test solution (0.1 mol/l) were added for neutralization, 10 ml of 1 mol/l acetate/sodium acetate buffer (pH 5.0) was added, water was further added to adjust the volume of the solution to 100 ml, and the resultant was used as a substrate solution.

The substrate solution (10 ml) was taken and heated at 37°C for 10 minutes, 1 ml of a sample solution was added thereto, the mixture was immediately mixed by stirring, the resultant was heated at the same temperature for 10 or 30 minutes, 4 ml of the Fehling's solution was added with mild stirring, the resultant was heated in a water bath for 15 minutes, the resultant **was cooled** to 25°C or lower, and 2 ml of a 30% potassium iodide solution and 2 ml of sulfuric acid (1 → 6) were added to prepare a test liquid. The Fehling's solution was prepared at the time of use by mixing 1 volume of a copper solution, which is obtained by dissolving 34.66 g of copper (ii) sulfate pentahydrate fine crystals in water to prepare 500 ml of the copper solution, with 1 volume of an alkaline tartrate solution, which is obtained by dissolving 173 g of (+)-potassium sodium tartrate tetrahydrate and 50 g of sodium hydroxide in water to prepare 500 ml of the alkaline tartrate solution. Separately, a comparative solution was prepared with the use of 10 ml of water instead of the substrate solution in the same manner as in the case of preparation of the test liquid. Iodine liberated from the test liquid and the comparative liquid were subjected to titration with a 0.05 mol/l sodium thiosulfate solution. The end point was defined as the time at which blue color was quenched with the addition of 1 or 2 drops of the soluble starch test solution as the end point of the titration was approached.

The amount of the enzyme that would increase the reducing power equivalent to 1 mg of glucose per minute is defined as 1 unit (1 U) and determined in accordance with the following formula: β-amylase activity (U/g, U/ml) = glucose amount (mg) × 1/10 × 1/M glucose amount (mg) = (b - a) × 1.6 × f
a: the titration value of the enzyme reaction solution (ml); b: the titration value of the blank solution (ml)
1.6: 1 ml of the 0.05 mol/l sodium thiosulfate solution is equivalent to 1.6 mg of glucose
1/10: the unit conversion coefficient of reaction time (min)
M: the amount of the sample in 1 ml of the sample solution (g or ml); f: the factor for 0.05 mol/l sodium thiosulfate solution (for quantification)

### [Test Example 1]

The temperature of purified water for soaking was returned to room temperature. A starting material; i.e., polished white rice (uncooked rice) of *Koshihikari* (produced in Niigata, Japan on 2020), was divided into portions of 100 g each to prepare samples. The samples (polished white rice) each placed in a strainer were gently stirred manually in a clockwise direction 10 times in purified water contained in a bowl, and purified water was exchanged with fresh purified water. This procedure was repeated 4 times. The rice samples were washed, drained, and transferred to rice kettles. The enzymes were dissolved in water of composition as shown in Table 1, and the enzyme solutions were introduced into the rice kettles to soak the rice samples (at room temperature for 1 hour). Thereafter, the kettles were mounted on rice cookers (SR-03GP, Panasonic), and the rice samples were cooked in a usual manner. The cooked rice samples were steamed for 10 minutes, the prepared cooked rice samples were spread in food containers, and the rice samples were then cooled to room temperature.

Table 2 shows the amount of enzymes and the amount of water added to the test products a to d.

**[Table 2]**

| Test product | Uncooked rice | Amount of enzyme addition (U/g uncooked rice) | Amount of water addition | Remarks |
|---|---|---|---|---|
| a | 100 g | 3 U | 140 g | Enzyme |
| b | 100 g | 3 U | 160 g | Enzyme + water |
| c | 100 g | 0 | 140 g | Control |
| d | 100 g | 0 | 160 g | Control + water |

The cooked test products a to d were subjected to measurement of hardness and stickiness with the use of a rheometer COMPAC-100II (Sun Scientific Co., Ltd.). Hardness on the rice grain surface was measured. Specifically, the weight to press 3 rice grains to a thickness that is 35% of the initial thickness was defined as hardness. The stickiness of the whole rice grain was measured. Specifically, the load necessary for a plunger to return after 3 rice grains were pressed to a thickness that is 90% of the initial thickness was defined as stickiness. The measurement of hardness and stickiness was performed at n = 20.

After the measurement, the test products a to d were stored at 15°C. After the test products a to d were stored for 1 to 2 days, the test products a to d were subjected to measurement of hardness and stickiness in the same manner as described above.

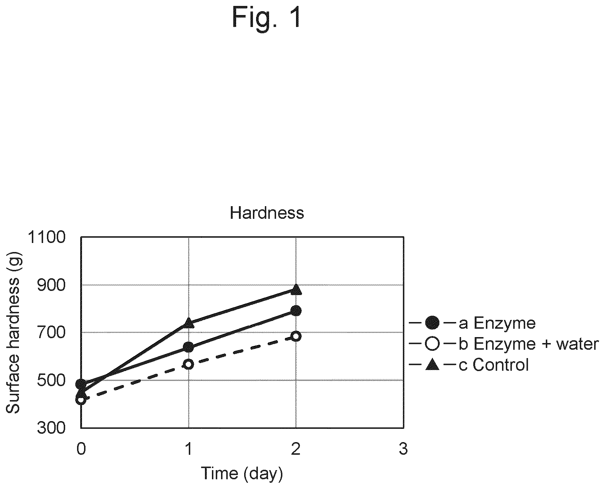

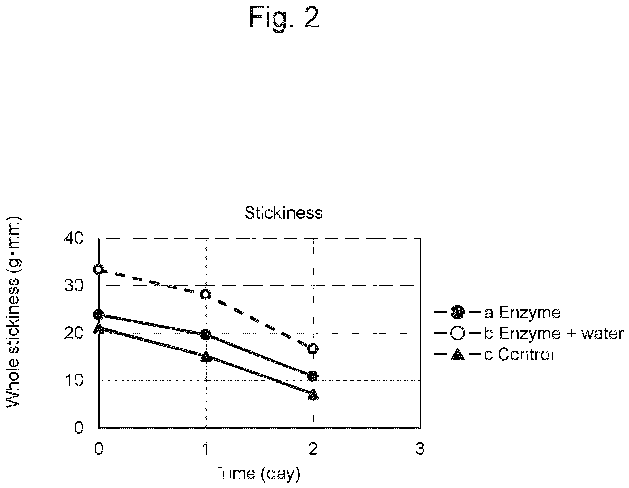

Figure 1 shows the results of measurement of hardness, and Figure 2 shows the results of measurement of stickiness. The test product a was prepared with the addition of an enzyme (4-α-glucanotransferase), the test product b was prepared by increasing the amount of water of the test product a, the test product c was a control sample prepared without the addition of an enzyme, and the test product d was prepared by increasing the amount of water of the test product c.

The test product d was not prepared in the form of cooked rice, but it had a soft texture similar to that of porridge.

With the elapse of time, retrogradation of cooked rice advanced in the test products a to c. Specifically, the cooked rice exhibited high hardness and low stickiness. The test product a had a softer texture and higher stickiness than those of the test product c. This indicates that the enzyme (4-α-glucanotransferase) exerts the effects of suppressing retrogradation. The test product b (enzyme and water) had a softer texture and higher stickiness than those of the test product a (enzyme). The results demonstrate that effects of suppressing retrogradation of cooked rice can be enhanced by adding 4-α-glucanotransferase to uncooked rice and increasing the amount of water compared with the amount of water used at the time of usual rice cooking.

The test product d, the test product a, and the test product b were defined as Example 1, Example 2, and Example 3, respectively.

The results of Test Example 1 are shown in Table 3 in addition to Figure 1 and Figure 2. Table 3 shows hardness and stickiness of Examples 1 to 3 measured after rice cooking, after cooling and before storage (after cooling/before storage), and 1 to 3 days after the initiation of storage. The hardness and the stickiness shown in Table 3 are each indicated at a ratio relative to 1.00, which is the value measured after cooling/before storage of Example 1. A value closer to 1.00 indicates more preferable stickiness.

**[Table 3]**

| | | | Ex. 1 | Exa 2 | Ex. 3 |
|---|---|---|---|---|---|
| Enzyme used | 4-α-glucanotransferase | U/g uncooked rice | - | 3 U | 3 U |
| Amount of water | | g | 140 | 140 | 160 |
| Hardness | After cooling/before storage | | 1.00 | 1.07 | 0.93 |
| | Day 1 | | 1.65 | 1.42 | 1.26 |
| | Day 2 | | 1.96 | 1.76 | 1.52 |
| | Day 3 | | 2.53 | 2.53 | 2.40 |
| Stickiness | After cooling/before storage | | 1.00 | 1.13 | 1.58 |
| | Day 1 | | 0.72 | 0.93 | 1.33 |
| | Day 2 | | 0.34 | 0.51 | 0.79 |
| | Day 3 | | 0.18 | 0.28 | 0.43 |

### [Test Example 2]

With the use of 4-α-glucanotransferase in combination with β-amylase, cooked rice was obtained in the same manner as in Test Example 1. The cooked rice obtained was subjected to measurement of hardness and stickiness in the same manner as in Test Example 1. Tests were performed a plurality of times while changing the storage temperatures and the amounts of the enzymes added.

### (1) Examples 4 to 6

The storage temperature was set at 15°C, and 1.95 U of β-amylase was used as the enzyme. Table 4 shows stickiness measured after cooling and before storage (after cooling/before storage) and 1 day after the initiation of storage. The stickiness shown in Table 4 is indicated at a ratio relative to 1.00, which is the value measured after cooling/before storage of Example 4. A value closer to 1.00 indicates more preferable stickiness. Table 4 demonstrates that, in comparison with Example 4 and Example 5, stickiness of Example 6 was not deteriorated, and stickiness was enhanced after it was stored for 1 day.

**[Table 4]**

| | | | Ex. 4 | Ex. 5 | Ex. 6 |
|---|---|---|---|---|---|
| Enzyme used | β-amylase | U/g uncooked rice | - | 1.95 U | 1.95 U |
| Amount of water Stickiness | | g | 140 | 140 | 160 |
| | After cooling/before storage | | 1.00 | 0.90 | 0.99 |
| | Day 1 | | 0.64 | 0.82 | 1.12 |

### (2) Examples 7 to 9

The storage temperature was set at 15°C, and 1.5 U of 4-α-glucanotransferase and 0.975 U of β-amylase were used as the enzymes. Table 5 shows hardness and stickiness measured after cooling and before storage (after cooling/before storage) and 1 to 3 days after the initiation of storage. The hardness and the stickiness shown in Table 5 are each indicated at a ratio relative to 1.00, which is the value measured after cooling/before storage of Example 7. Values closer to 1.00 indicate more preferable hardness and stickiness. Table 5 demonstrates that Example 9 is superior to Example 8 in terms of hardness and stickiness. That is, effects of suppressing retrogradation were observed.

**[Table 5]**

| | | | Exc 7 | Ex. 8 | Ex. 9 |
|---|---|---|---|---|---|
| Enzyme used | 4-α-glucanotransferase | U/g uncooked rice | - | 1.5 U | 1.5 U |
| | β-amylase | | | 0.975 U | 0.975 U |
| Amount of water Hardness | g | | 140 | 140 | 160 |
| | After cooling/before storage | | 1.00 | 1.07 | 0.94 |
| | Day 1 | | 1.31 | 1.31 | 1.20 |
| | Day 2 | | 1.47 | 1.86 | 1.25 |
| | Day 3 | | 1.96 | 2.00 | 1.44 |
| Stickiness | After cooling/before storage | | 1.00 | 1.23 | 1.28 |
| | Day 1 | | 0.67 | 0.61 | 1.02 |
| | Day 2 | | 0.29 | 0.27 | 0.83 |
| | Day 3 | | 0.24 | 0.17 | 0.50 |

### (3) Examples 10 and 11

The storage temperature was set at 4°C, and 0.015 U of 4-α-glucanotransferase and 0.00975 U of β-amylase were used as the enzymes. Table 6 shows hardness and stickiness measured after cooling and before storage and 3 days after the initiation of storage. The hardness and the stickiness shown in Table 6 are each indicated at a ratio relative to 1.00, which is the value measured after cooling and before storage (after cooling/before storage) of Example 10. Values closer to 1.00 indicate more preferable hardness and stickiness. Table 6 demonstrates that Example 11 is superior to Example 10 in terms of hardness and stickiness. Specifically, the results demonstrate that, in the case of low-temperature storage, effects of suppressing retrogradation are further improved with the use of enzymes in combination and by increasing the amount of water compared with the amount of water used at the time of usual rice cooking.

**[Table 6]**

| | | | Ex. 10 | Ex. 11 |
|---|---|---|---|---|
| Enzyme used | 4-α-glucanotransferase | U/g uncooked rice | - | 0.015 U |
| | β-amylase | | - | 0.00975 U |
| Amount of water Hardness | | g | 140 | 160 |
| | After cooling/before storage | | 1.00 | 1.11 |
| | Day 3 | | 2.55 | 2.25 |
| Stickiness | After cooling/before storage | | 1.00 | 1.14 |
| | Day 3 | | 0.09 | 0.26 |

### [Test Example 3] Sensory evaluation of graininess of cooked rice

Cooked rice was obtained in the same manner as in Test Example 1. The cooked rice after cooling/before storage was comprehensively evaluated by 4 panelists by "visual inspection" and in terms of "the resilience of a rice grain when pressed manually," and evaluation was performed using the 8-point-scale criteria from 0 to 7 shown in Table 7. "The resilience of a rice grain when pressed manually" was evaluated by placing a rice grain on an index finger, pressing the rice grain with a thumb, and evaluating the resilience thereof. This procedure was repeated 3 times.

The enzymes used and the amounts of water addition are as described below.
(1) Without enzyme treatment (control)
(2) Treatment with 3 U of 4-α-glucanotransferase by itself
(3) Treatment with 1.5 U of 4-α-glucanotransferase in combination with 0.975 U of β-amylase

The amount of water addition was 140, 150, 160, 170, 180, 200, or 250 g, relative to 100 g of rice.

**[Table 7]**

| Point | Criteria | Remarks |
|---|---|---|
| 0 | No graininess | Porridge state |
| 1 | Very soft | Porridge state |
| 2 | Soft | Porridge state |
| 3 | Relatively soft | Normal rice |
| 4 | Control | Normal rice |
| 5 | Relatively hard | Normal rice |
| 6 | Hard | Hard rice |
| 7 | Very hard | Hard rice |

Table 8 shows the results of comprehensive evaluation of sensory evaluation concerning the graininess.

**[Table 8]**

| Amount of water addition (g/rice) | (1) Control (without enzyme treatment) | (2) 4-α-glucanotransferase | (3) 4-α-glucanotransferase + β-amylase |
|---|---|---|---|
| 140 | 4 | 5.5 | 5 |
| 150 | 3 | 4 | 4 |
| 160 | 2 | 3 | 3 |
| 170 | 1 | 2 | 2 |
| 180 | 0 | 1 | 1 |
| 200 | 0 | 0 | 0 |
| 250 | 0 | 0 | 0 |

As shown in Table 8, when the amount of water addition was 160 g, the rice (1) without enzyme treatment was soft (porridge state); however, the enzyme-treated rice (2) and (3) were relatively soft (normal rice state).

The results demonstrate that more preferable properties can be achieved by enzyme treatment.

### Industrial Applicability

The method of the present invention enables production of cooked rice or a processed cooked rice product in which retrogradation is suppressed more sufficiently.

All publications, patents, and patent applications cited herein are incorporated herein by reference in their entirety.

## Claims

1. A method for producing cooked rice or a processed cooked rice product in which retrogradation is suppressed, comprising: a step of allowing 4-α-glucanotransferase and/or β-amylase to act on uncooked rice as a starting material; and a step of rice cooking performed by increasing the amount of water.

2. The method for production according to claim 1, wherein the step of allowing 4-α-glucanotransferase and/or β-amylase to act on uncooked rice as a starting material is performed before the step of rice cooking.

3. The method for production according to claim 1, wherein the step of allowing 4-α-glucanotransferase and/or β-amylase to act on uncooked rice as a starting material is performed simultaneously with the step of rice cooking.

4. The method for production according to claim 1, wherein an amount of 4-α-glucanotransferase and/or β-amylase used per g of uncooked rice is an amount corresponding to an enzyme activity of 0.01 U or more.

5. The method for production according to claim 1, wherein a ratio of weight of water to weight of uncooked rice is 1.45 to 1.8.

6. An agent for suppressing retrogradation of cooked rice or a processed cooked rice product, comprising 4-α-glucanotransferase and/or β-amylase.

7. Cooked rice or a processed cooked rice product, which is obtained by the method for production according to any one of claims 1 to 5.

8. The cooked rice or processed cooked rice product according to claim 7, which comprises starch having a branched chain containing 3 sugar units linked by α-1,3 bonds.
